# FASCICULE DE BREVET EUROPEEN

(11) **EP 3 649 725 B1**
(45) Date de publication et mention de la délivrance du brevet: **12.07.2023**
(21) Numéro de dépôt: 18734865.1
(22) Date de dépôt: 04.05.2018
(51) Int. Cl.: B60K 1/00, H02K 9/19, B60K 11/02

(54) **ENSEMBLE MACHINE ÉLECTRIQUE ET SYSTÈME DE REFROIDISSEMENT À HUILE**
ELEKTRISCHE MASCHINE MIT EINEM SYSTEM ZUR ÖLKÜHLUNG BESAGTER ELEKTRISCHER MASCHINE
COMBINATION OF ELECTRICAL MACHINE AND SYSTEM FOR THE OIL COOLING OF SAID ELECTRICAL MACHINE

(30) Priorité: 10.05.2017 FR 1754073
(43) Date de publication de la demande: 13.05.2020
(73) Titulaire: Renault s.a.s, 92100 Boulogne Billancourt (FR); Nissan Motor Co., Ltd., Yokohama-shi, Kanagawa 221-0023 (JP)
(72) Inventeur: MIKATI, Karim, 75116 Paris (LB); BERNARDIN, Fabrice, 78740 Vaux Sur Seine (FR); BORIE, Julien, 78280 Guyancourt (FR); CARBON, Alain, 78955 Carrieres Sous Poissy (FR); BOISADAN, Fabrice, 92160 Antony (FR)
(74) Mandataire: Renault Group
(86) Numéro de dépôt international: PCT/FR2018/051134
(87) Numéro de publication internationale: WO 2018/206890

(56) Documents cités:
- WO-A2-2009/060276
- JP-A- 2012 191 719
- JP-A- 2016 201 959

## Description

La présente invention se rapporte de manière générale aux domaines de l'électrotechnique et de l'automobile, et concerne plus précisément un ensemble machine électrique et un système de refroidissement de ladite machine électrique refroidie par un liquide de refroidissement diélectrique de type huile.

Dans les systèmes de refroidissement de machines électriques de traction par circulation d'huile sur les parties actives de ces machines électriques, notamment leurs bobinages, un échangeur de chaleur est utilisé pour maintenir la température de l'huile en dessous d'un seuil de température. Cela permet de garantir l'évacuation des pertes thermiques de la machine de telle sorte que celle-ci ne surchauffe pas. On spécifie un débit d'huile assez important au niveau de l'échangeur de chaleur pour récupérer une quantité de calories représentative d'une machine électrique de traction en fonctionnement. Or l'augmentation du débit d'huile à partir d'un certain régime de fonctionnement, est défavorable au fonctionnement de la machine électrique du fait de l'augmentation des pertes par frottements dus à l'huile, qui en découle.

Le document FR3030383 propose d'utiliser pour refroidir la machine électrique, la même huile de refroidissement que l'huile utilisée pour lubrifier un réducteur disposé en sortie de la machine électrique, ce qui permet d'augmenter la température de l'huile rapidement à bas régime et de diminuer les pertes par frottements. Cependant la quantité d'huile utilisée doit être conséquente afin de maintenir un refroidissement efficace à haut régime, ce qui implique encore beaucoup de pertes par frottements.
Le document JP2016201959 décrit un ensemble machine électrique et système de refroidissement de ladite machine électrique comportant un stator et un rotor, ledit système de refroidissement comportant :
- un circuit de refroidissement apte à mettre en contact un liquide de refroidissement de type huile avec des parties actives de ladite machine électrique,
- un réservoir apte à collecter le liquide de refroidissement ayant refroidi lesdites parties actives,
- une pompe apte à réinjecter ledit liquide de refroidissement en amont desdites parties actives,
- et un échangeur de chaleur,
ensemble dans lequel ledit circuit de refroidissement comporte une branche de dérivation apte à dévier une partie du liquide de refroidissement circulant en amont desdites parties actives et à la faire passer dans un réservoir additionnel, ledit système de refroidissement comportant des moyens d'ouverture et de fermeture de ladite branche de dérivation en fonction d'un seuil de température du liquide de refroidissement ou, d'un seuil de température du rotor et/ou un seuil de température du stator, lesdits moyens d'ouverture et de fermeture étant notamment une électrovanne s'ouvrant lorsque la température du liquide de refroidissement est inférieure à un seuil et se fermant lorsque la température du liquide de refroidissement est supérieur audit seuil.

Un des buts de l'invention est de remédier à au moins une partie des inconvénients de la technique antérieure en fournissant un système de refroidissement d'une machine électrique, qui réalise un compromis entre un débit d'huile important pour refroidir l'huile circulant dans la machine électrique au niveau de l'échangeur de chaleur, et un débit d'huile faible pour diminuer les pertes par frottements dans la machine électrique.

A cette fin, l'invention propose un ensemble machine machine électrique et système de refroidissement selon la revendication 1.

Grâce à l'invention, le volume d'huile injecté en amont du circuit de refroidissement sur les parties actives de la machine électrique est plus important à basse température qu'à haute température. Ainsi l'huile se réchauffe plus vite, limitant les pertes par frottements. Le débit d'huile reste néanmoins important au niveau de l'échangeur de chaleur, ce qui rend le refroidissement efficace à haute température. Cette huile, à bas régime, est éventuellement chauffée au niveau d'un réducteur de sortie de la machine électrique avant d'être réinjectée dans celle-ci, afin de diminuer encore les pertes par frottements. Par rapport à l'art antérieur, dans l'invention le volume de liquide du réservoir est maintenu constant lors du fonctionnement de la machine électrique, c'est-à-dire qu'il n'y a qu'un réservoir d'huile, ce qui rend le système moins coûteux.

L'utilisation de la température du liquide de refroidissement et de moyens d'ouverture et de fermeture facilement pilotables avec cette donnée de température permettent de simplifier la réalisation du système ainsi que son coût.

Selon une autre caractéristique avantageuse de l'invention, ladite branche de dérivation est creusée dans un fond de carter ou un carter de fermeture de ladite machine électrique. Alternativement ladite branche de dérivation est réalisée par un tuyau flexible à l'extérieur du carter de la machine électrique.

Avantageusement encore, ledit circuit de refroidissement comporte :
- un injecteur situé en périphérie du stator de ladite machine électrique, apte à arroser en liquide de refroidissement une portion centrale de la surface externe longitudinale dudit stator,
- et un injecteur fixé à un fond de carter de ladite machine électrique, apte à arroser des têtes de bobine du rotor de la machine électrique.

Les parties actives sont ainsi efficacement refroidies. Notamment grâce à la force centrifuge du rotor, l'huile projetée sur les têtes de bobine du rotor est également projetée sur les têtes de bobine du stator ce qui permet de refroidir les extrémités du stator. Le coeur du stator est par ailleurs refroidi grâce à l'injecteur situé en périphérie du stator, qui par son débit permet à l'huile qu'il projette de circuler et de s'étaler autour de l'empilement de tôles du stator sans avoir le temps de pénétrer dans l'entrefer.

Avantageusement encore, le circuit de refroidissement comporte un passage dans un fond de carter de ladite machine électrique apte à amener du liquide de refroidissement au niveau d'un injecteur apte à arroser un roulement fixé audit fond de carter. L'huile utilisée pour le refroidissement est ainsi également utilisée pour lubrifier les roulements ce qui diminue les coûts de fabrication de la machine électrique.

Avantageusement encore, ledit passage est en outre apte à amener du liquide de refroidissement au niveau dudit injecteur fixé audit fond de carter et apte à arroser des têtes de bobine du rotor de la machine électrique. Cette implémentation astucieuse permet par un seul passage traversant le fond de carter dans la machine, d'alimenter l'injecteur arrosant les têtes de bobine du rotor, et de lubrifier un roulement.

Préférentiellement, le circuit de refroidissement comporte des injecteurs situés symétriquement par rapport à un plan perpendiculaire à l'axe longitudinal de la machine électrique et situé à mi-chemin du fond de carter de ladite machine électrique et du carter de fermeture de ladite machine électrique. Ainsi la machine électrique avec seulement trois injecteurs, deux arrosant les têtes de bobine du rotor et un arrosant le centre du stator, est efficacement refroidie à coût réduit.

Avantageusement, lesdits moyens d'ouverture et de fermeture sont une valve thermostatique à trois voies disposée en amont dudit échangeur de chaleur et apte à :
- soit faire passer ledit liquide de refroidissement sortant de la pompe en amont desdites parties actives en court-circuitant ledit échangeur de chaleur (et sans le faire passer par ladite branche de dérivation,
- soit faire passer ledit liquide de refroidissement dans ledit échangeur de chaleur, celui-ci étant connecté an aval à un embranchement amenant ledit liquide de refroidissement d'une part vers lesdites parties actives de la machine électrique, et d'autre part vers ladite branche de dérivation.

Ladite valve thermostatique comporte par exemple une capsule de cire fixée à une partie fixe de ladite valve, une chambre de ladite valve séparant ladite partie fixe d'au moins une partie mobile de ladite capsule de cire, et en ce qu'une rainure ou un trou pratiqué dans ladite capsule de cire permet un passage dudit liquide de refroidissement entre ladite chambre et ledit circuit de refroidissement. Cette variante de réalisation est peu coûteuse.

L'invention concerne aussi un véhicule électrique ou hybride comportant une machine électrique et un système de refroidissement de ladite machine électrique selon l'invention dans lequel la machine électrique est une machine de traction.

D'autres caractéristiques et avantages apparaîtront à la lecture d'un mode de réalisation préféré décrit en référence aux figures dans lesquelles :
- la figure 1 représente un système de refroidissement d'une machine électrique selon l'invention, dans ce mode de réalisation préféré,
- la figure 2 représente un système de refroidissement selon l'invention dans une première configuration,
- la figure 3 représente un système de refroidissement selon l'invention dans une seconde configuration.,
- la figure 4 représente un système de refroidissement selon l'invention selon une variante de réalisation, dans une première configuration,
- la figure 5 représente un système de refroidissement selon l'invention selon cette variante de réalisation, dans une seconde configuration,
- la figure 6 représente une valve trois voies utilisée dans cette variante de réalisation de l'invention, dans la première configuration,
- et la figure 7 représente la valve trois voies utilisée dans cette variante de réalisation de l'invention, dans la seconde configuration.

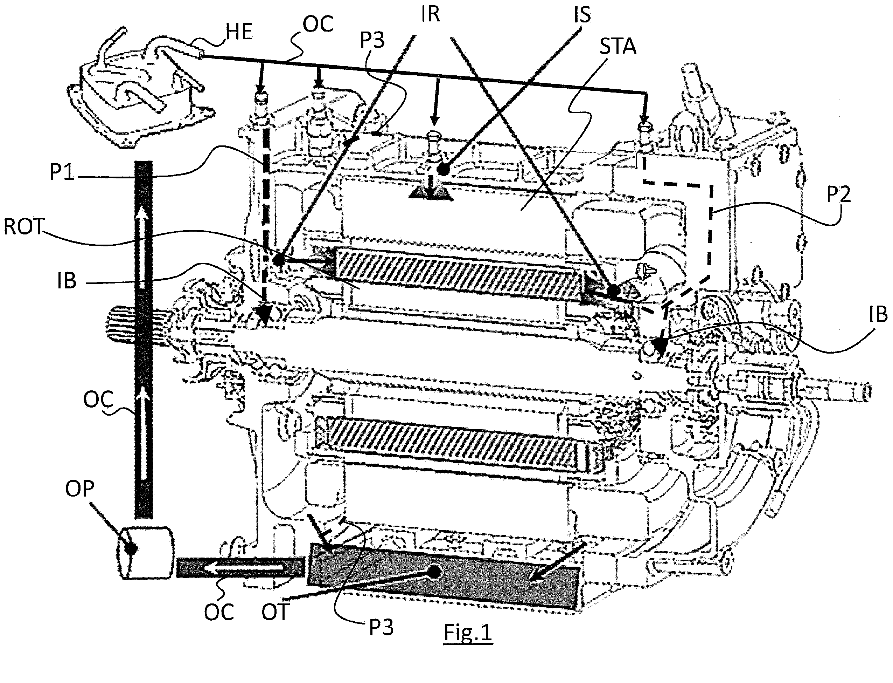

Selon un mode préféré de réalisation de l'invention représenté à la **figure 1****,** le système de refroidissement selon l'invention est apte à refroidir une machine électrique ME représentée en coupe d'un véhicule électrique ou hybride, cette machine électrique ME comportant notamment :
- un stator STA constitué principalement d'un empilement de tôles magnétiques et de bobinages en cuivre insérés dans des encoches de l'empilement de tôles,
- un rotor ROT constitué principalement dans ce mode de réalisation de l'invention, d'un empilement de tôles magnétiques formant des pôles magnétiques saillants, et de bobinages en cuivre bobinés autour de ces pôles magnétiques,
- et un arbre rotor fixé d'une part au rotor ROT et d'autre part à un carter CA de la machine électrique par l'intermédiaire de roulements RO.

Un système de refroidissement à l'huile selon l'invention est utilisé pour refroidir les parties actives de la machine électrique ME, que sont le rotor ROT et le stator STA. Pour cela, le système de refroidissement comporte notamment :
- un circuit de refroidissement OC permettant de mettre en contact de l'huile avec les parties actives de la machine électrique ME ;
- un réservoir d'huile OT qui collecte l'huile ayant refroidi les parties actives de la machine électrique ME et descendue par gravité dans le réservoir d'huile OT situé en bas de la machine électrique ME ;
- une pompe OP qui réinjecte l'huile contenue dans le réservoir d'huile OT en amont des parties actives de la machine électrique ME ;
- et un échangeur HE eau-huile qui refroidit l'huile reçue depuis la pompe OP avant qu'elle soit réinjectée en amont des parties actives de la machine électrique ME.
Le circuit de refroidissement OC comporte pour cela une portion formée de tubes en sortir de l'échangeur HE, qui amène l'huile refroidie au niveau de quatre entrées situées en partie supérieure de la machine électrique ME :
- Une première entrée est située sur un fond de carter de la machine électrique ME, ce fond de carter formant une paroi verticale du carter CA de la machine électrique ME, dans un plan orthogonal par rapport à la direction longitudinale L de la machine électrique ME. Cette première entrée amène une partie de l'huile refroidie au niveau de l'échangeur jusqu'à un passage P1 ménagé dans le fond de carter et menant d'une part à un injecteur IB situé en vis-à-vis d'un des roulements RO de l'arbre rotor de la machine électrique ME, et d'autre part à un injecteur IR situé en vis-à-vis des têtes de bobines du rotor. Ce passage P1 est sensiblement vertical jusqu'à l'injecteur IB et comporte en amont de cet injecteur IB une branche latérale menant à l'injecteur IR fixé au fond de carter.
- Une deuxième entrée amène une partie de l'huile refroidie au niveau de l'échangeur jusqu'à un passage P3 creusé circulairement dans la carter CA de la machine électrique ME et menant directement au réservoir d'huile OT sans passer par les parties actives de la machine électrique ME. Ce passage P3 est semi-circulaire et en partie masqué sur la **figure 1** par le stator STA et le rotor ROT qu'il contourne. Il fait partie de la branche de dérivation de l'huile au sens de l'invention.
- Une troisième entrée amène une partie de l'huile refroidie au niveau de l'échangeur HE jusqu'à un injecteur IS situé sensiblement au milieu de la partie longitudinale supérieure du carter CA de la machine électrique ME.
- Une quatrième entrée amène une partie de l'huile refroidie au niveau de l'échangeur HE jusqu'à un passage P2 ménagé dans le carter de fermeture de la machine électrique ME. Ce carter de fermeture forme une deuxième paroi verticale du carter CA disposée symétriquement au fond de carter par rapport à un plan orthogonal à l'axe longitudinal L de la machine électrique ME et coupant l'arbre rotor sensiblement en son milieu. Ce passage P2 mène une partie de l'huile en amont des parties actives de la machine électrique ME, d'une part à un autre injecteur IB situé en vis-à-vis d'un des roulements RO de l'arbre rotor de la machine électrique ME, et d'autre part à un autre injecteur IR situé en vis-à-vis des têtes de bobines du rotor. Ce passage P2 est creusé plus ou moins verticalement dans le carter de fermeture en suivant la forme de celui-ci, jusqu'à l'injecteur IB, et comporte en amont de cet injecteur IB une branche latérale menant à l'injecteur IR fixé au carter de fermeture.

La disposition sensiblement symétrique des injecteur IS, IR et IB par rapport à un plan orthogonal à l'axe longitudinal L de la machine électrique ME et coupant l'arbre rotor en son milieu, permet un refroidissement et une lubrification homogène de la machine électrique ME. Notamment la disposition et le débit de l'injecteur IS permet d'arroser l'empilement de tôles du stator de sorte que l'huile s'étale sur la surface externe de cet empilement de tôles sans entrer profondément dans celui-ci. Ainsi le coeur du stator est refroidi sans que l'huile pénètre dans l'entrefer de la machine électrique ME.

Il est à noter que dans cette demande le terme « sensiblement » signifie « à peu de chose près », dans une fourchette de 10% par rapport à la direction ou à la position définie ainsi.

L'huile issue des injecteurs IS et IR, ayant refroidi le stator STA et le rotor ROT, descend par gravité dans le réservoir d'huile OT. En parallèle, l'huile issue des injecteurs IB de lubrification descend également par gravité dans le réservoir d'huile. Le débit des injecteurs de lubrification est réglé de manière à ce qu'il soit plus faible que le débit des injecteurs de refroidissement.

Le circuit de refroidissement OC amène par un système de crépine et de tuyaux, l'huile du réservoir jusqu'à la pompe OP qui elle-même est connectée par un tuyau amenant l'huile pompée à l'échangeur HE huile-eau.

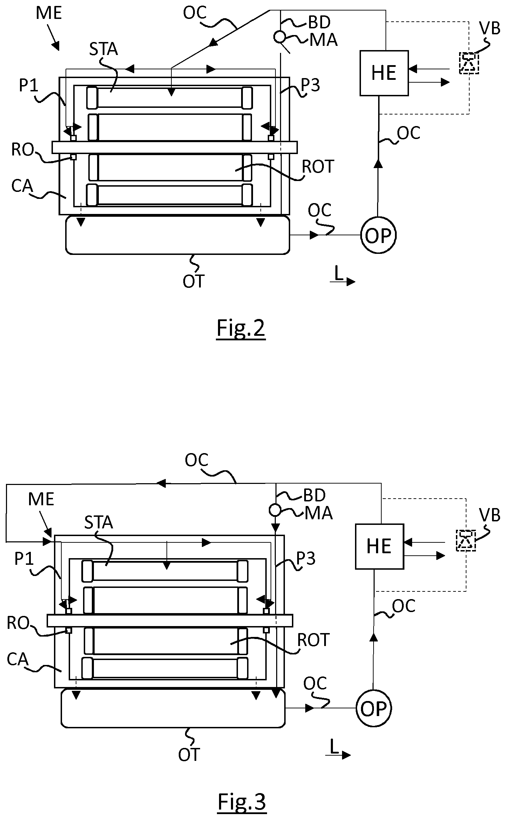

Comme représenté à la **figure 2****,** qui montre la circulation de l'huile dans un fonctionnement à basse température de la machine électrique ME, la branche de dérivation BD du circuit de refroidissement OC comporte le passage P3 ainsi qu'en amont du passage P3, une électrovanne MA. Dans ce mode de fonctionnement de la machine électrique ME, la température de l'huile est inférieure à un seuil de température, fixé ici à 40°C (Celsius). En variante ce seuil fait partie d'une fourchette de température allant de 30°C à 50°C. L'électrovanne MA est pilotée par une unité de commande électronique de telle sorte qu'au-dessous de ce seuil de température, elle est en position ouverte. Ainsi, lorsque la température de l'huile est au-dessous de ce seuil, toute l'huile amenée en amont des parties actives de la machine électrique ME est utilisée pour refroidir et lubrifier la machine électrique ME, assurant un réchauffement rapide de l'huile pour éviter de fortes pertes par frottements.

Il est de plus à noter que dans cette variante de réalisation de la **figure 2****,** en sortie de l'échangeur HE, une branche en Y amène l'huile d'une part vers les entrées d'huile permettant d'amener celle-ci vers les injecteurs de refroidissement et de lubrification, et d'autre part vers la branche de dérivation BD, qui est réalisée ici dans le carter de la machine électrique, mais alternativement est réalisable par un tuyau flexible extérieur à ce carter.

Dans un autre mode de fonctionnement de la machine électrique ME à haute température, représenté à la **figure 3****,** la température de l'huile est supérieure à 40°C. Au-dessus de ce seuil de température, l'électrovanne MA est pilotée par l'unité de commande électronique de telle sorte qu'au-dessus de ce seuil de température, elle est en position fermée. Ainsi, lorsque la température de l'huile est au-dessus de ce seuil, une partie de l'huile amenée en amont des parties actives de la machine électrique ME est déviée directement dans le réservoir d'huile OT sans passer par les parties actives de la machine électrique ME. Cette portion d'huile déviée forme préférentiellement 50 à 60% du débit d'huile en sortie de l'échangeur HE. Ainsi à haute température, dans cette machine de traction, 2 litres par minutes circulent dans les parties actives et environ 2 à 3 litres par minutes dans la branche de dérivation. Ainsi le refroidissement au niveau de l'échangeur est amélioré et on évite le passage en mode dégradé de la machine électrique qui limiterait le couple disponible pour le conducteur.

De plus, la **figure 3** présente une variante de réalisation du circuit de refroidissement OC : une unique entrée dans la machine électrique est utilisée pour amener l'huile vers les parties actives. Cette entrée, située sur le carter ou le carter de fermeture, amène l'huile à un embranchement de deux passages: un passage vertical dans le carter de fermeture pour alimenter un premier injecteur de refroidissement du rotor et un premier injecteur de lubrification d'un premier roulement, et un passage horizontal vers la portion principale cylindrique du carter pour alimenter l'injecteur du stator puis un deuxième injecteur de refroidissement du rotor et un deuxième injecteur de lubrification d'un deuxième roulement. Différents diamètres des injecteurs de refroidissement du rotor et de lubrification des roulements assurent différents débits pour refroidir le rotor et pour lubrifier les roulements.

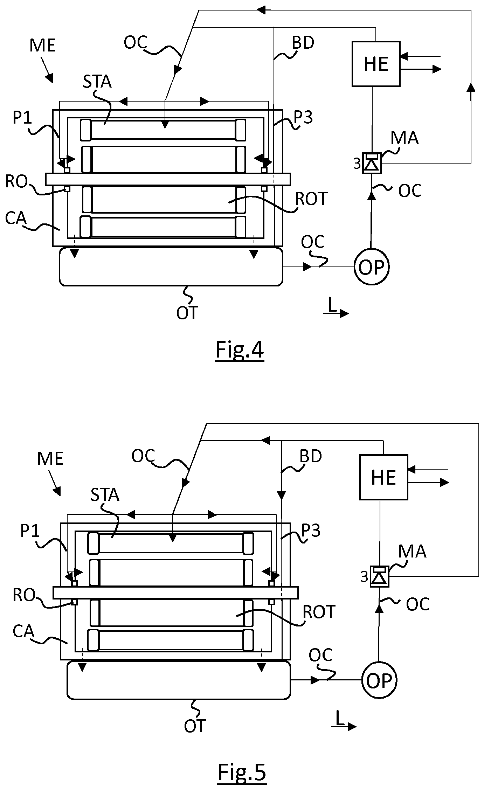

La **figure 4** présente une variante de réalisation du système de refroidissement selon l'invention, dans laquelle les moyens MA d'ouverture et de fermeture de la branche de dérivation BD sont une valve thermostatique à trois voies. Cette valve est disposée, dans cette variante de réalisation de l'invention, en amont de l'échangeur de chaleur HE et permet :
- soit de faire passer l'huile sortant de la pompe OP en amont des parties actives en court-circuitant l'échangeur de chaleur HE et sans la faire passer par la branche de dérivation BD,
- soit de faire passer l'huile dans l'échangeur de chaleur HE, celui-ci étant connecté an aval à un embranchement amenant l'huile d'une part vers les parties actives de la machine électrique ME, et d'autre part vers la branche de dérivation BD.

Cette variante de réalisation permet de court-circuiter l'échangeur de chaleur HE sans utiliser une valve VB de court-circuit de l'échangeur HE, représentée en pointillés sur les **figures 2 et 3** et qui permet d'accélérer la montée en température de l'huile au démarrage de la machine électrique ME de traction.

Ainsi dans une première configuration dans cette **figure 4** correspondant à un fonctionnement à basse température de la machine électrique ME, la température de l'huile étant inférieure à un seuil de température, fixé ici à 40°C, la valve MA laisse passer l'huile uniquement dans la branche qui court-circuite l'échangeur HE et amène l'huile aux parties actives de la machine, sans passer par la branche de dérivation BD. Ainsi, lorsque la température de l'huile est au-dessous de ce seuil, toute l'huile amenée en amont des parties actives de la machine électrique ME est utilisée pour refroidir et lubrifier la machine électrique ME, et n'est pas refroidie par l'échangeur HE, ce qui assure un réchauffement rapide de l'huile pour éviter de fortes pertes par frottements.

Dans une seconde configuration de cette variante de réalisation représentée à la **figure 5****,** correspondant à un fonctionnement de la machine électrique ME à haute température, la température de l'huile est supérieure à 40°C. Au-dessus de ce seuil de température, la valve MA laisse passer l'huile uniquement vers l'échangeur HE. L'échangeur HE refroidit ainsi l'huile et la fait passer en sortie dans l'embranchement qui distribue l'huile d'une part en amont des parties actives de la machine ME et d'autre part dans la branche de dérivation BD. Ainsi, lorsque la température de l'huile est au-dessus de ce seuil, une partie de l'huile amenée en amont des parties actives de la machine électrique ME est déviée directement dans le réservoir d'huile OT sans passer par les parties actives de la machine électrique ME. Le refroidissement au niveau de l'échangeur HE est donc amélioré et on évite le passage en mode dégradé de la machine électrique qui limiterait le couple disponible pour le conducteur.

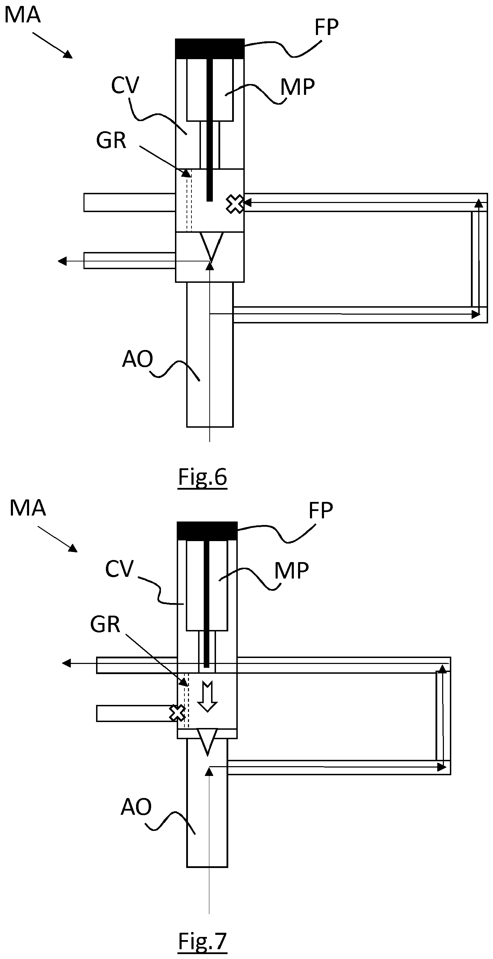

La **figure 6** représente la valve thermostatique MA, ici une valve thermostatique à capsule de cire MP, dans la première configuration de la variante de réalisation correspondant à la **figure 4****.** La température de l'huile étant inférieure au seuil de 40°C, la capsule de ci re MP, fixée à la partie fixe FP de la valve MA, n'est pas dilatée, et bloque le passage de l'huile vers l'échangeur HE tout en permettant le passage de l'huile vers la branche qui court-circuite l'échangeur pour amener l'huile directement en amont des parties actives de la machine électrique ME.

La **figure 7** représente la valve thermostatique MA, dans la seconde configuration de la variante de réalisation correspondant à la **figure 5****.** La température de l'huile étant supérieure au seuil de 40°C, la capsule de cire MP, fixée à la partie fixe FP de la valve MA, est dilatée, et bloque le passage de l'huile vers la branche qui court-circuite l'échangeur HE pour amener l'huile directement en amont des parties actives de la machine électrique ME, tout en permettant le passage de l'huile vers l'échangeur de chaleur HE. Lors de la dilatation de la capsule de cire MP, la pression dans la chambre CV de la valve MA varie. La différence de pression entre l'huile dans cette chambre CV et dans le circuit d'huile OC est susceptible d'empêcher le mouvement de la capsule de cire MP. Afin de résoudre ce problème, une rainure est pratiquée dans la capsule de cire MP afin de ré-équilibrer la pression entre la chambre CV de la valve MA et le circuit d'huile OC au niveau de l'arrivée d'huile AO dans la valve MA. Cette rainure GR permet un fin passage d 'huile entre la chambre CV et le circuit d'huile OC. En variante un trou traversant est pratiqué dans la capsule de cire MP, permettant un passage de l'huile entre la chambre CV et le circuit d'huile OC.

D'autres modes de réalisation sont également envisageables, dans lesquels les moyens de fermeture et d'ouverture de la branche de dérivation sont par exemple un thermostat au lieu d'une électrovanne, ou une vanne trois voies en aval de l'échangeur, ou dans lesquels la température pilotant ces moyens de fermeture et d'ouverture est une température mesurée du rotor et/ou du stator ( deux températures seuils étant considérées dans ce cas, la branche de dérivation étant opérationnelle dès que le rotor ou le stator atteint sa température critique associée). De plus il est à noter que l'invention est applicable également aux machines électriques dont le rotor est à aimants permanents, les injecteurs IR arrosant dans ce cas les faces latérales des aimants du rotor plutôt que les têtes de bobine du rotor.

## Revendications

1. Ensemble machine électrique (ME) et système de refroidissement de ladite machine électrique (ME) comportant un stator (STA) et un rotor (ROT), ledit système de refroidissement comportant :
- un circuit de refroidissement (OC) apte à mettre en contact un liquide de refroidissement de type huile avec des parties actives de ladite machine électrique (ME),
- un réservoir (OT) apte à collecter le liquide de refroidissement ayant refroidi lesdites parties actives,
- une pompe (OP) apte à réinjecter ledit liquide de refroidissement en amont desdites parties actives,
- et un échangeur de chaleur (HE),
ensemble dans lequel ledit circuit de refroidissement (OC) comporte une branche de dérivation (BD) apte à dévier une partie du liquide de refroidissement circulant en amont desdites parties actives et à la faire passer directement dans le réservoir (OT) sans passer par lesdites parties actives, ledit système de refroidissement comportant des moyens (MA) d'ouverture et de fermeture de ladite branche de dérivation (BD) en fonction d'un seuil de température du liquide de refroidissement ou, d'un seuil de température du rotor et/ou un seuil de température du stator, lesdits moyens (MA) d'ouverture et de fermeture étant une électrovanne piloté par une unité de commande électronique ou un thermostat, aptes à permettre le passage de liquide de refroidissement dans ladite branche de dérivation (BD) dès que la température du liquide de refroidissement devient supérieure audit seuil de température et apte à empêcher le passage du liquide de refroidissement dans ladite branche de dérivation dès que la température est inférieure audit seuil, ledit seuil étant compris entre 30 et 50°C.

2. Ensemble machine électrique (ME) et système de refroidissement selon la revendication 1, dans lequel ladite branche de dérivation (BD) est creusée dans un fond de carter ou un carter de fermeture de ladite machine électrique (ME).

3. Ensemble machine électrique (ME) et système de refroidissement selon la revendication 1, dans lequel ladite branche de dérivation est réalisée par un tuyau flexible à l'extérieur du carter de ladite machine électrique.

4. Ensemble machine électrique (ME) et système de refroidissement selon l'une quelconque des revendications 1 à 3, dans lequel ledit circuit de refroidissement comporte :
- un injecteur (IS) situé en périphérie du stator (STA) de ladite machine électrique (ME), apte à arroser en liquide de refroidissement une portion centrale de la surface externe longitudinale dudit stator (STA),
- et un injecteur (IR) fixé à un fond de carter de ladite machine électrique (ME), apte à arroser des têtes de bobine du rotor (ROT) de la machine électrique (ME).

5. Ensemble machine électrique et système de refroidissement selon l'une quelconque des revendications 1 à 4, dans lequel le circuit de refroidissement (OC) comporte un passage (P1) dans un fond de carter de ladite machine électrique apte à amener du liquide de refroidissement au niveau d'un injecteur (IB) apte à arroser un roulement (RO) fixé audit fond de carter.

6. Ensemble machine électrique (ME) et système de refroidissement selon les revendications 4 et 5, dans lequel ledit passage (P1) est en outre apte à amener du liquide de refroidissement au niveau dudit injecteur (IR) fixé audit fond de carter et apte à arroser des têtes de bobine du rotor (ROT) de la machine électrique (ME).

7. Ensemble machine électrique (ME) et système de refroidissement selon l'une quelconque des revendications 4 à 6, dans lequel le circuit de refroidissement (OC) comporte des injecteurs (IR, IS, IB) situés symétriquement par rapport à un plan perpendiculaire à l'axe longitudinal (L) de la machine électrique (ME) et situé à mi-chemin du fond de carter de ladite machine électrique (ME) et du carter de fermeture de ladite machine électrique (ME).

8. Ensemble machine électrique (ME) et système de refroidissement selon l'une quelconque des revendications 1 à 7, dans lequel lesdits moyens (MA) d'ouverture et de fermeture sont une valve thermostatique à trois voies disposée en amont dudit échangeur de chaleur (HE) et apte à :
- soit faire passer ledit liquide de refroidissement sortant de la pompe (OP) en amont desdites parties actives en court-circuitant ledit échangeur de chaleur (HE) et sans le faire passer par ladite branche de dérivation (BD),
- soit faire passer ledit liquide de refroidissement dans ledit échangeur de chaleur (HE), celui-ci étant connecté an aval à un embranchement amenant ledit liquide de refroidissement d'une part vers lesdites parties actives de la machine électrique (ME), et d'autre part vers ladite branche de dérivation (BD).

9. Ensemble machine électrique (ME) et système de refroidissement selon la revendication 8, dans lequel ladite valve thermostatique comporte une capsule de cire fixée à une partie fixe (FP) de ladite valve, une chambre (CV) de ladite valve séparant ladite partie fixe (FP) d'au moins une partie mobile de ladite capsule de cire, et en ce qu'une rainure ou un trou (GR) pratiqué dans ladite capsule de cire permet un passage dudit liquide de refroidissement entre ladite chambre (CV) et ledit circuit (OC) de refroidissement.

10. Véhicule électrique ou hybride comportant un ensemble machine électrique (ME) et système de refroidissement de ladite machine électrique (ME) selon l'une quelconque des revendications 1 à 9, **caractérisé en ce que** la machine électrique est une machine de traction.

## Patentansprüche

1. Baugruppe aus elektrischer Maschine (ME) und System zur Kühlung der elektrischen Maschine (ME), die einen Stator (STA) und einen Rotor (ROT) aufweist, wobei das Kühlsystem Folgendes aufweist:
- einen Kühlkreislauf (OC), der geeignet ist, eine ölartige Kühlflüssigkeit mit aktiven Teilen der elektrischen Maschine (ME) in Kontakt zu bringen,
- einen Behälter (OT), der geeignet ist, die Kühlflüssigkeit zu sammeln, die die aktiven Teile gekühlt hat,
- eine Pumpe (OP), die geeignet ist, die Kühlflüssigkeit in Strömungsrichtung vor den aktiven Teilen wieder einzuspritzen,
- und einen Wärmetauscher (HE),
Baugruppe, bei der der Kühlkreislauf (OC) einen Bypass (BD) aufweist, der geeignet ist, einen Teil der Kühlflüssigkeit, die in Strömungsrichtung vor den aktiven Teilen zirkuliert, abzuleiten und sie direkt in den Behälter (OT) zu leiten, ohne die aktiven Teile zu durchlaufen, wobei das Kühlsystem Mittel (MA) zum Öffnen und Schließen des Bypasses (BD) in Abhängigkeit von einem Temperaturschwellenwert der Kühlflüssigkeit oder einem Temperaturschwellenwert des Rotors und/oder einem Temperaturschwellenwert des Stators aufweist, wobei die Mittel (MA) zum Öffnen und Schließen ein Magnetventil sind, das von einer elektronischen Steuereinheit oder einem Thermostat gesteuert wird, die geeignet sind, den Durchgang von Kühlflüssigkeit in den Bypass (BD) zu ermöglichen, sobald die Temperatur der Kühlflüssigkeit höher als der Temperaturschwellenwert wird, und geeignet sind, den Durchgang von Kühlflüssigkeit in den Bypass zu verhindern, sobald die Temperatur niedriger als der Schwellenwert ist, wobei der Schwellenwert zwischen 30 und 50 °C liegt.

2. Baugruppe aus elektrischer Maschine (ME) und Kühlsystem nach Anspruch 1, wobei der Bypass (BD) in einen Gehäuseboden oder in ein Einschlussgehäuse der elektrischen Maschine (ME) eingelassen ist.

3. Baugruppe aus elektrischer Maschine (ME) und Kühlsystem nach Anspruch 1, wobei der Bypass durch einen flexiblen Schlauch an der Außenseite des Gehäuses der elektrischen Maschine realisiert wird.

4. Baugruppe aus elektrischer Maschine (ME) und Kühlsystem nach einem der Ansprüche 1 bis 3, wobei der Kühlkreislauf Folgendes aufweist:
- einen Injektor (IS), der sich am Umfang des Stators (STA) der elektrischen Maschine (ME) befindet und geeignet ist, einen zentralen Abschnitt der Längsaußenfläche des Stators (STA) mit Kühlflüssigkeit zu besprühen,
- und einen Injektor (IR), der an einem Gehäuseboden der elektrischen Maschine (ME) befestigt ist und geeignet ist, Spulenköpfe des Rotors (ROT) der elektrischen Maschine (ME) zu besprühen.

5. Baugruppe aus elektrischer Maschine und Kühlsystem nach einem der Ansprüche 1 bis 4, wobei der Kühlkreislauf (OC) einen Durchgang (P1) in einem Gehäuseboden der elektrischen Maschine aufweist, der geeignet ist, Kühlflüssigkeit auf die Höhe eines Injektors (IB) zu bringen, der geeignet ist, ein an dem Gehäuseboden befestigtes Lager (RO) zu besprühen.

6. Baugruppe aus elektrischer Maschine (ME) und Kühlsystem nach den Ansprüchen 4 und 5, wobei der Durchgang (P1) außerdem dazu geeignet ist, Kühlflüssigkeit auf die Höhe des Injektors (IR) zu bringen, der an dem Gehäuseboden befestigt ist und geeignet ist, Spulenköpfe des Rotors (ROT) der elektrischen Maschine (ME) zu besprühen.

7. Baugruppe aus elektrischer Maschine (ME) und Kühlsystem nach einem der Ansprüche 4 bis 6, wobei der Kühlkreislauf (OC) Injektoren (IR, IS, IB) aufweist, die symmetrisch zu einer Ebene senkrecht zur Längsachse (L) der elektrischen Maschine (ME) angeordnet sind und sich auf halbem Weg zwischen dem Gehäuseboden der elektrischen Maschine (ME) und dem Einschlussgehäuse der elektrischen Maschine (ME) befinden.

8. Baugruppe aus elektrischer Maschine (ME) und Kühlsystem nach einem der Ansprüche 1 bis 7, wobei die Mittel (MA) zum Öffnen und Schließen ein thermostatisches Dreiwegeventil sind, das in Strömungsrichtung vor dem Wärmetauscher (HE) angeordnet ist und geeignet ist:
- entweder die aus der Pumpe (OP) in Strömungsrichtung vor den aktiven Teilen austretende Kühlflüssigkeit durch Kurzschließen des Wärmetauschers (HE) zu leiten und ohne sie durch den Bypass (BD) zu leiten,
- oder die Kühlflüssigkeit durch den Wärmetauscher (HE) zu leiten, wobei dieser in Strömungsrichtung nachgeschaltet mit einer Abzweigung verbunden ist, die die Kühlflüssigkeit einerseits zu den aktiven Teilen der elektrischen Maschine (ME) und andererseits zu dem Bypass (BD) führt.

9. Baugruppe aus elektrischer Maschine (ME) und Kühlsystem nach Anspruch 8, wobei das Thermostatventil eine Wachskapsel aufweist, die an einem festen Teil (FP) des Ventils befestigt ist, wobei eine Kammer (CV) des Ventils den festen Teil (FP) von mindestens einem beweglichen Teil der Wachskapsel trennt und wobei eine Nut oder ein Loch (GR) in der Wachskapsel einen Durchgang der Kühlflüssigkeit zwischen der Kammer (CV) und dem Kühlkreislauf (OC) ermöglicht.

10. Elektro- oder Hybridfahrzeug mit einer Baugruppe aus elektrischer Maschine (ME) und System zur Kühlung der elektrischen Maschine (ME) nach einem der Ansprüche 1 bis 9, **dadurch gekennzeichnet, dass** die elektrische Maschine eine Zugmaschine ist.

## Claims

1. Combination of electric machine (ME) and cooling system of said electric machine (ME) comprising a stator (STA) and a rotor (ROT), said cooling system comprising:
- a cooling circuit (OC) able to bring an oil-type cooling liquid into contact with active parts of said electric machine (ME),
- a tank (OT) able to collect the cooling liquid that has cooled said active parts,
- a pump (OP) able to reinject said cooling liquid upstream of said active parts,
- and a heat exchanger (HE),
combination in which said cooling circuit (OC) comprises a bypass branch (BD) able to deviate some of the cooling liquid circulating upstream of said active parts and to cause it to pass directly into the tank (OT) without passing through said active parts, said cooling system comprising means (MA) for opening and for closing said bypass branch (BD) as a function of a temperature threshold of the cooling liquid or a temperature threshold of the rotor and/or a temperature threshold of the stator, said opening and closing means (MA) being a solenoid valve controlled by an electronic control unit or a thermostat, able to allow cooling liquid to pass into said bypass branch (BD) as soon as the temperature of the cooling liquid becomes greater than said temperature threshold and able to prevent the cooling liquid from passing into said bypass branch as soon as the temperature is lower than said threshold, said threshold being between 30 and 50°C.

2. Combination of electric machine (ME) and cooling system according to Claim 1, wherein said bypass branch (BD) is recessed into a casing end wall or a casing enclosing said electric machine (ME).

3. Combination of electric machine (ME) and cooling system according to Claim 1, wherein said bypass branch is implemented by a flexible tube outside the casing of said electric machine.

4. Combination of electric machine (ME) and cooling system according to any one of Claims 1 to 3, wherein said cooling circuit comprises:
- an injector (IS) situated at the periphery of the stator (STA) of said electric machine (ME), able to spray a central portion of the longitudinal external surface of said stator (STA) with cooling liquid,
- and an injector (IR) fixed to a casing end wall of said electric machine (ME), able to spray winding heads of the rotor (ROT) of the electric machine (ME).

5. Combination of electric machine and cooling system according to any one of Claims 1 to 4, wherein the cooling circuit (OC) comprises a passage (P1) in a casing end wall of said electric machine, able to feed cooling liquid to an injector (IB) able to spray a rolling bearing (RO) fixed to said casing end wall.

6. Combination of electric machine (ME) and cooling system according to Claims 4 and 5, wherein said passage (P1) is also able to feed cooling liquid to said injector (IR) fixed to said casing end wall and able to spray winding heads of the rotor (ROT) of the electric machine (ME) .

7. Combination of electric machine (ME) and cooling system according to any one of Claims 4 to 6, wherein the cooling circuit (OC) comprises injectors (IR, IS, IB) situated symmetrically with respect to a plane perpendicular to the longitudinal axis (L) of the electric machine (ME) and situated half-way between the casing end wall of said electric machine (ME) and the casing enclosing said electric machine (ME).

8. Combination of electric machine (ME) and cooling system according to any one of Claims 1 to 7, wherein said opening and closing means (MA) consist of a three-way thermostatic valve disposed upstream of said heat exchanger (HE) and able:
- either to cause said cooling liquid leaving the pump (OP) upstream of said active parts to bypass said heat exchanger (HE) without causing it to pass through said bypass branch (BD),
- or to cause said cooling liquid to pass into said heat exchanger (HE), the latter being connected downstream to a branch feeding said cooling liquid, on the one hand, to said active parts of the electric machine (ME) and, on the other hand, to said bypass branch (BD).

9. Combination of electric machine (ME) and cooling system according to Claim 8, wherein said thermostatic valve comprises a wax capsule fixed to a fixed part (FP) of said valve, a chamber (CV) of said valve separating said fixed part (FP) from at least one mobile part of said wax capsule, and wherein a groove or a hole (GR) formed in said wax capsule allows said cooling liquid to pass between said chamber (CV) and said cooling circuit (OC) .

10. Electric or hybrid vehicle comprising a combination of electric machine (ME) and cooling system of said electric machine (ME) according to any one of Claims 1 to 9, **characterized in that** the electric machine is a traction machine.
